Europäisches Patentamt

European Patent Office

Office européen des brevets

(11) Publication number: **0 260 582 B1**

(12) **EUROPEAN PATENT SPECIFICATION**

(45) Date of publication of patent specification: **29.07.92**  (51) Int. Cl.⁵: **F01N 7/16**, F02B 27/06

(21) Application number: **87113132.2**

(22) Date of filing: **08.09.87**

(54) **Exhaust control device of engine.**

(30) Priority: **13.09.86 JP 215043/86**

(43) Date of publication of application:
**23.03.88 Bulletin 88/12**

(45) Publication of the grant of the patent:
**29.07.92 Bulletin 92/31**

(84) Designated Contracting States:
**DE ES FR GB IT**

(56) References cited:
**DE-B- 1 084 081      DE-B- 2 110 000
DE-C- 946 268        FR-A- 2 567 194
US-A- 2 717 583      US-A- 2 862 490**

**AUTOMOTIVE ENGINEERING, vol. 95, no. 6,
June 1987, pages 95-96, Warrendale, PA, US;
J. YAMAGUCHI: "Motorcyle innovations"**

**PATENT ABSTRACTS OF JAPAN, vol. 11, no.
175 (M-596)[2622], 5th June 1987; & JP-A-62
7924 (HONDA MOTOR CO. LTD) 14-01-1987**

**PATENT ABSTRACTS OF JAPAN, vol. 6, no.
267 (M-182)[1145], 25th December 1982; &
JP-A-57 159 919 (HINO JIDOSHA KOGYO
K.K.) 02-10-1982**

PATENT ABSTRACTS OF JAPAN, vol. 7, no.
211 (M-243)[1356], 17th September 1983; &
JP-A-58 106 143 (HINO JIDOSHA KOGYO
K.K.) 24-06-1983

(73) Proprietor: **Yamaha Motor Co., Ltd.**
**P.O. Box 1**
**Iwata 438(JP)**

(72) Inventor: **Kitta, Hideaki**
**2822 Nishikaizuka**
**Iwata-shi Shizuoka-ken(JP)**

(74) Representative: **Patentanwälte Grünecker,
Kinkeldey, Stockmair & Partner
Maximilianstrasse 58
W-8000 München 22(DE)**

EP 0 260 582 B1

## Description

### Industrial Field of Utilization

The present invention relates to an exhaust control device of engine which has exhaust control valves provided one in each of a plurality of exhaust pipes installed between the exhaust ports of engine and an expansion chamber.

### Background of the Invention

It is known that, in four- and two-cycle engines, exhaust gases are intermittently led into exhaust valves, thereby producing the inertial and pulsating effects of exhaust gases in the exhaust pipes. The effects (termed dynamic effects) vary with the engine speed. Therefore, should the dynamic effects be maximized to increase a volumetric efficiency at a certain speed of revolution, the dynamic effects may counteract to excessively lower the volumetric efficiency at other speeds of revolution. There has been such a problem, therefore, that if specifications (exhaust pipe length and exhaust pipe) of the exhaust device are set to obtain the optimum dynamic effects within the range of high speeds, an excessive decrease in torque (torque valley) within the medium speed range results.

It is, therefore, considered to provide an exhaust control valve for changing the area of exhaust flow path in the vicinity of the open end of the exhaust pipe connected to the expansion chamber, so that the area of flow path will decrease within the speed range in which the volumetric efficiency decreases, and that the area of flow path will increase within other speed range.

In a multiple-cylinder engine, should the exhaust pipes be joined on the downstream side in the expansion chamber, a lowered volumetric efficiency and a decreased torque may result due to exhaust interference among the cylinders. In order to cope with this problem, therefore, it is considered to provide an exhaust control valve in each exhaust pipe and to reduce the area of te exhaust flow path by closing the control valve within the speed range in which there occurs an adverse effect due to the presence of the exhaust interference.

It is also considered to insert an exhaust control valve in the exhaust pipe to improve combustion by controlling the back pressure or to control exhaust gas component by controlling self EGR (Exhaust Gas Recirculation).

As stated above, it is considered to provide, in exhaust pipes, exhaust control valves which change the area of exhaust flow path for various purposes such as improvements in the volumetric efficiency and combustion, and control of exhaust gas component. In a multiple-cylinder engine having a plurality of exhaust pipes, however, there will be such a problem that an exhaust control valve must be inserted in each exhaust pipe, and individual control of each exhaust pipe will complicate the exhaust device.

Also, when the valve shafts of each exhaust control valve are in common use, there will take place such a disadvantage that the valve shaft greatly extends with heat, and furthermore, the method of arrangement of exhaust pipes is restricted depending upon the location of the exhaust pipes, diminishing design freedom in determining the location of the exhaust pipes.

An exhaust control device in accordance with the preamble of claim 1 is known from DE-B-1 084 081. This known exhaust control device is designed as an exhaust brake mechanism for four cycle internal combustion engines, having an exhaust turbo charger. Those exhaust brake mechanisms are conventionally used for heavy vehicles. The use of individual control valves in each exhaust pipe of an internal combustion engine is shown by US-A-2 862 490 and DE-C-946 268.

### [Object of the Invention]

It is the object of the present invention, to provide an exhaust control device for a motorcycle, which can simplify the use of such a control device for a plurality of exhaust pipes, which reduces valve shaft elongation caused by heat and which allows that the width of the lower part of the exhaust control valve assembly can be held to a small size, so that a great bank angle can be maintained.

### Constitution of the Invention

This object is solved according to the present invention by an exhaust control device in accordance with claim 1. Preferred embodiments of the exhaust control device are subject matter of claims 2 to 8.

### Brief Description of the Drawings

Fig. 1 is a front view of an exhaust system of a motorcycle as one embodiment of the present invention;
Fig. 2 and Fig. 3 are a side view and a plan view thereof;
Fig. 4 is a side view of a motorcycle using this exhaust system;
Fig. 5 is a side sectional view of an exhaust control valve assembly;
Fig. 6 is a sectional view taken along the line of VI-VI; and

Fig. 7 and Fig. 8 are a plan view and a left side view respectively.

Fig. 9 and Fig. 10 are views showing exhaust control valve arrangement of other embodiments.

[Preferred Embodiment]

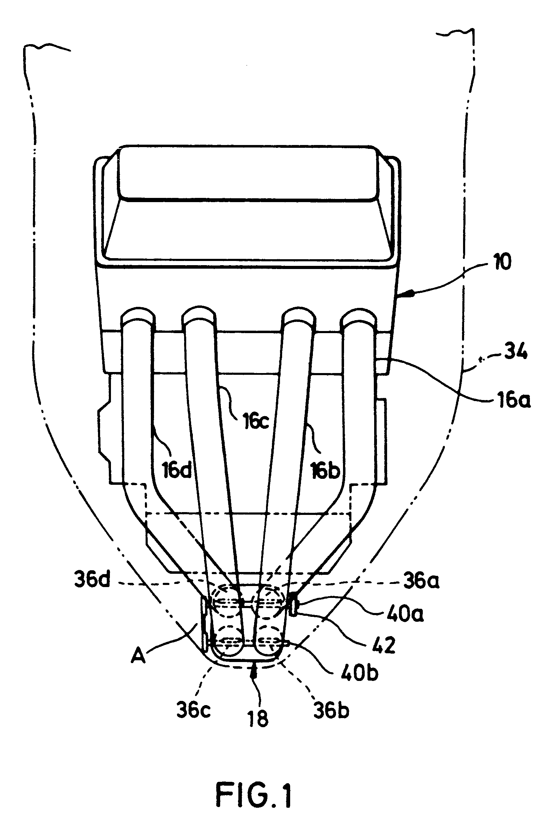

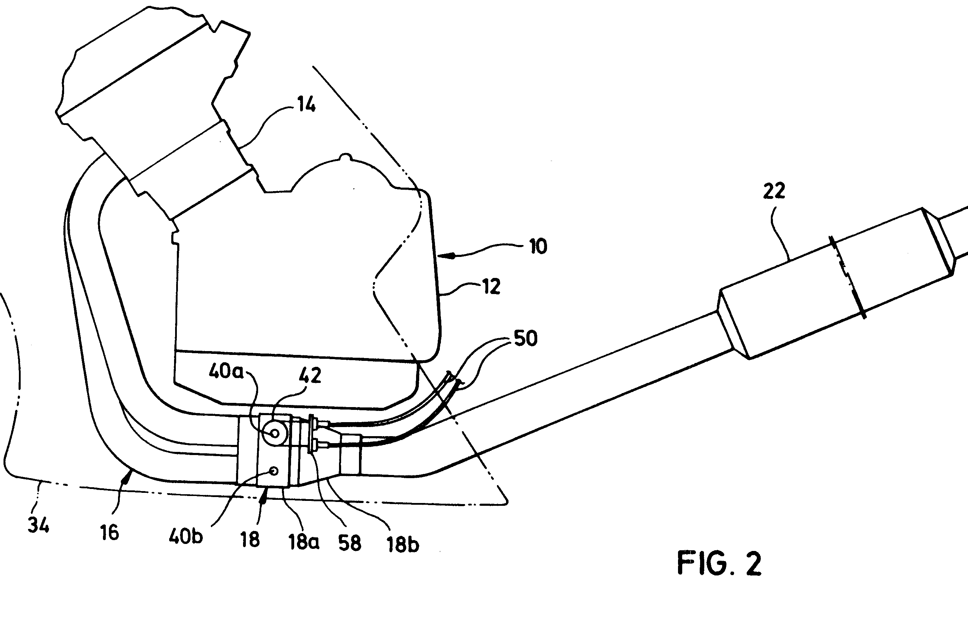

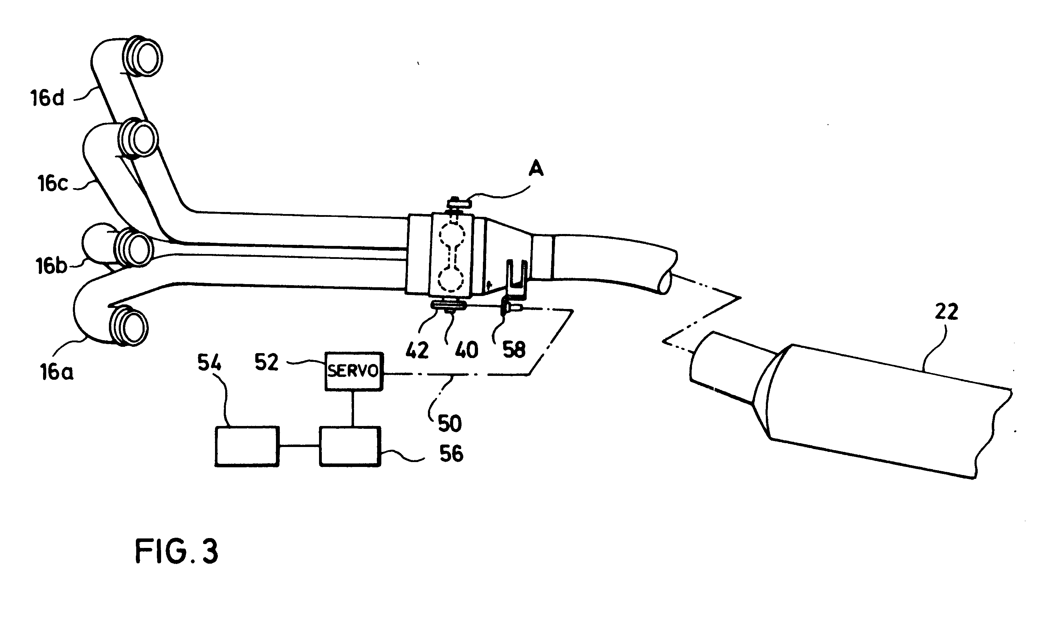

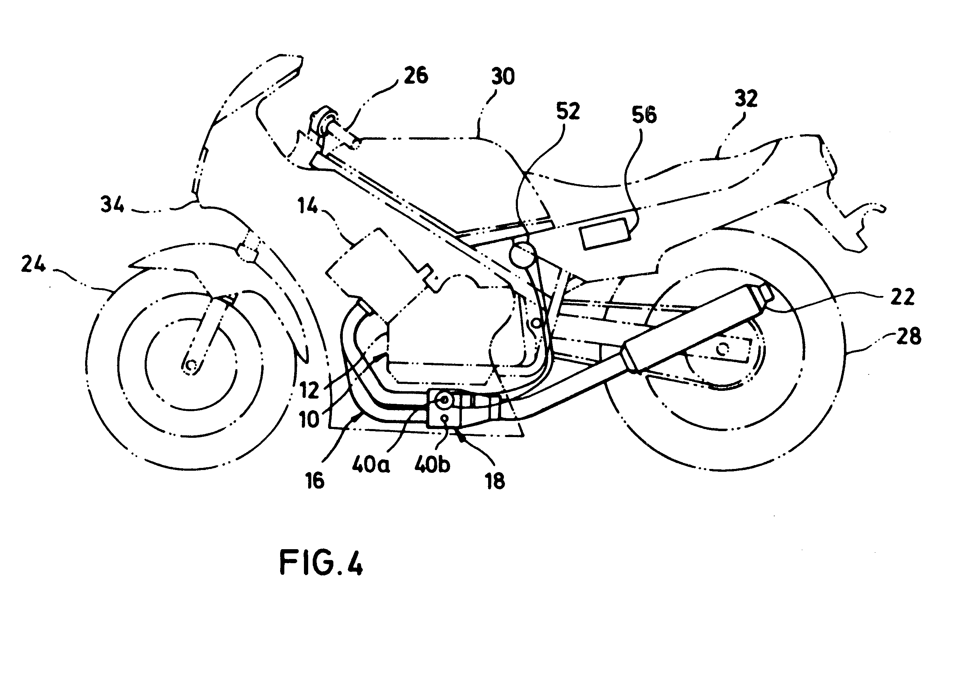

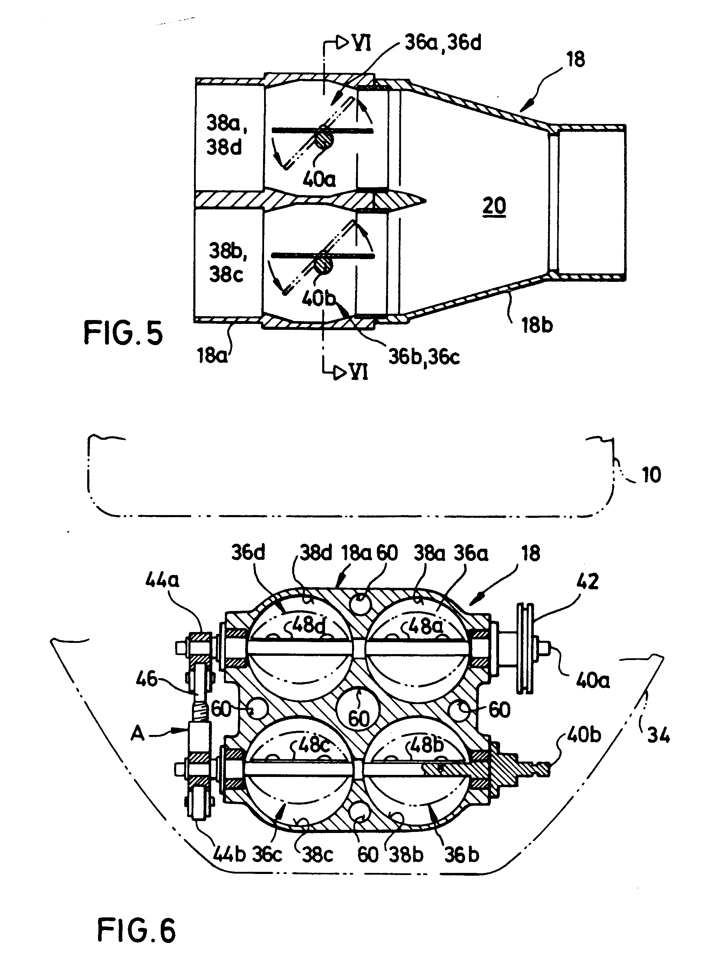

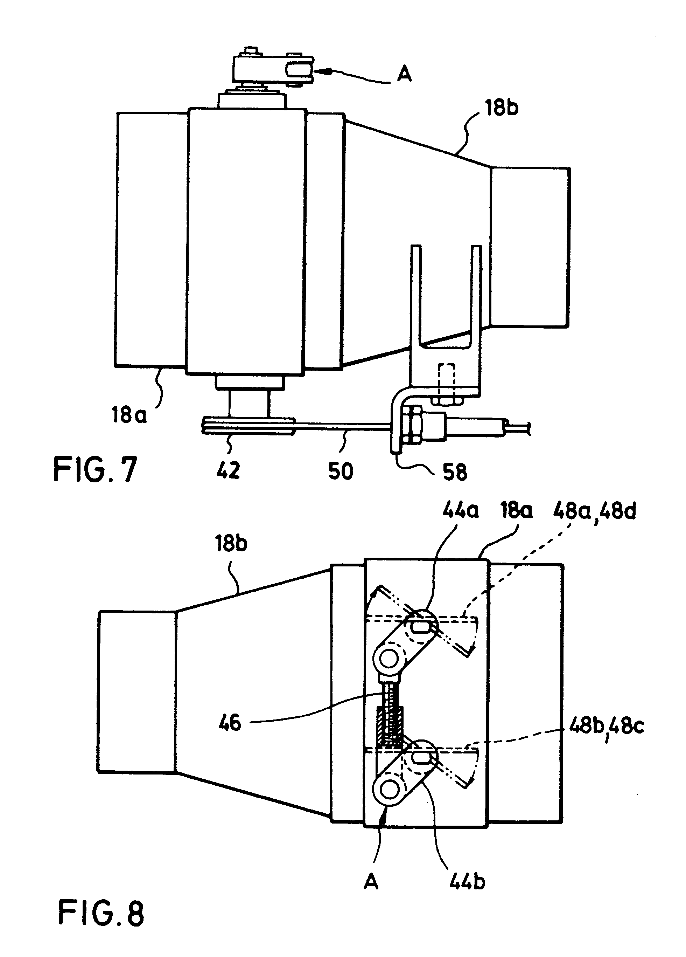

Fig. 1 is a front view of the exhaust system of a motorcycle shown in one preferred embodiment of the present invention; Figs. 2 and 3 are a side view and a plan view thereof; Fig. 4 is a side view of a motorcycle using this exhaust system; Fig. 5 is a side sectional view of an exhaust control valve assembly; Fig. 6 is a sectional view taken along line VI-VI thereof; and Figs. 7 and 8 are a plan view and a left side view.

In Fig. 4, numeral 10 is a four-cycle four-cylinder engine mounted in the vicinity of the center of car body. This engine 10 has a cylinder 14 extending obliquely upwardly from the crankcase 12. The exhaust system is provided with four exhaust pipes 16 (16a - 16d) extending from the front of the cylinder 14 to under the crankcase 12, an exhaust control valve assembly 18 which is connected at the rear end of these exhaust pipes 16 and collects exhaust gases, and one muffler 22 which leads the exhaust gases collected in an expansion chamber 20 of this exhaust control valve assembly 18 (see Fig. 5).

In Fig. 4, 22 is a front wheel, 26 is a handlebar, 28 is a rear wheel, 30 is a fuel tank cover, and 32 is a saddle. Furthermore, 34 is a fairing which covers the aforesaid engine 10, exhaust pipes 16, and the right and left sides and lower part of the exhaust control valve assembly 18.

The exhaust control valve assembly 18 has a plurality of butterfly exhaust control valves 36 (36a - 36d) which change the area of exhaust passage of each exhaust pipe 16. Namely, this assembly 18 has a body 18a having round bores (38a - 38d) communicating to each exhaust pipe 16 and forming a regular square at center; a manifold 18b forming the aforesaid expansion chamber 20; two valve shafts 40a, 40b mounted non-coaxially and horizontally through the round bores 38a, 38d in the upper stage and the round bores 38b, 38c in the lower stage; a pulley 42 as a rotation input member fixed at the right end of the valve shaft 40a; levers 44a, 44b fixed at the left end of both valve shafts 40a, 40b; and a link 46 connecting the rotating ends of both levers 44a, 44b. Namely, the lever 44 and the link 46 combine to form a link mechansim A as a rotation transmission mechanism which synchronously turns both valve shafts 40. On each of the valve shafts 40 are fixed round valve plates 48 (48a - 48d), which are positioned in each of the round bores 38.

The pulley 42 fixed on the right end of the valve shaft 40a is forced to turn in either direction by a servo motor 52 through a wire 50 (See Fig. 3.). This servo motor 52 is so controlled by a control circuit 56 as to close each control valve 36 within a speed range in which the volumetric efficiency lowers and to open within other speed range, in accordance with an engine speed detected for example from an ignition device 54.

Therefore, when the diameter and length of the exhaust pipes 16 are set such that the volumetric efficiency will increase within the high-speed range of the engine 10, the control circuit 56 drives the servo motor 52 so that the exhaust control valve 36 will be closed in the medium and low speed ranges. The exhaust control valves in the lower stage 36b, 36c are controlled to open to the same opening within the range of about 45 degrees (See Figs. 5 and 8) by the link mechanism A simultaneously with the exhaust control valves in the upper stage 36a, 36d.

The positive pressure wave produced by opening the exhaust valve of the engine 10 spreads at a speed of sound within the exhaust pipe 16, rapidly expanding at its open end to generate a negative pressure wave, which spreads in the reverse direction at a speed of sound within the exhaust pipe 16 back into the exhaust valve of the engine 10. If the exhaust control valve 36 located near this open end is kept closed, the positive pressure wave produced by the opening of the exhaust valve is reflected by this exhaust control valve 36, flowing as a positive pressure wave back at a speed of sound to the exhaust valve. Accordingly, when the exhaust control valve 36 is controlled so as to reduce the area of the exhaust flow path to one half, the sum of the negative pressure wave which is generated at the open end of the exhaust pipe and flows back, and the positive pressure wave refleclteld by the exhaust control valve 36, will be zero. In this case the pulsating effect is eliminated, and therefore the lowering of the volumetric efficiency (generaqtion of a torque valley) within the medium speed range can be restricted.

To use this exhaust control valve 36 for the purpose of preventing the lowering of torque by exhaust interference among cylinders, this exhaust control valve 36 is closed within a speed range in which excessive lowering of torque caused by exhaust gas interference takes place. When closing this exhaust control valve 36 within the low-speed range, the exhaust control valve that the area of exhaust flow path can be throttled by about 70 percent, or to reduce the opening to about 30 percent, can be used.

The outer tube of the wire 50 is held by an outer bracket 58 fixed on the manifold 18b (See Fig. 7). The body 18a is desired to be provided with a lightening hole 60 of suitable size in a suitable position in order to decrease thermal deformation of the body 18a (Fig. 6).

This preferred embodiment applies the present invention to motorcycles, with exhaust pipes 16a and 16d, and 16b and 16c arranged in two stages, upper and lower, under the engine 10; accordingly it is possible to reduce the width of the exhaust system under the engine and to increase the bank angle of the vehicle body.

Since the pulley 42 is mounted on the valve shaft 40a in the upper stage, the wire and the outer bracket of the wire are set in high positions; therefore the width of the lower part of the exhaust control valve assembly 18 can be held to a small size. Accordingly, a great bank angle can be maintained even when a fairing for covering them is mounted.

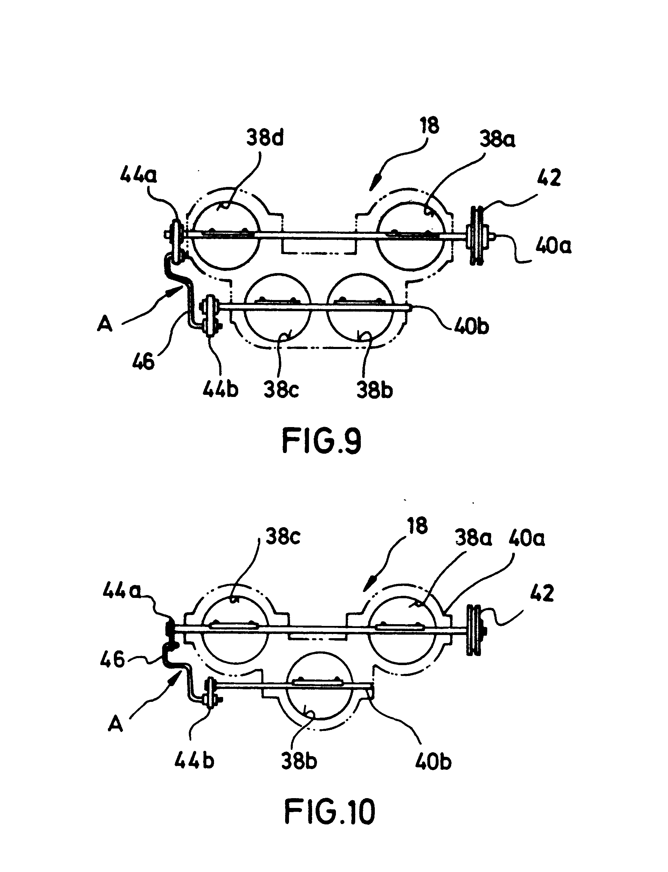

Fig. 9 and Fig. 10 are views showing the arrangement of each exhaust control valve 36 of other embodiments. These embodiments, as the aforementioned embodiment, are intended to arrange the exhaust control valve 36 under the engine of a motorcycle. In the embodiment in Fig. 9, round bores 38b, 38c in the lower stage of the four round bores 38 are disposed close to the center of the width direction of the engine 10, while the round bores 38a, 38d in the upper stage are positioned in the outer side.

In the embodiment in Fig. 10, the round bores 38b in the lower stage of round bores 38 are disposed outside of the round bores 38a, 38c in the upper stage. According to these embodiments, inasmuch as the exhaust pipes in the lower stage can be positioned in a higher place than the embodiments shown in Figs. 1 through 8, the greater bank angle of vehicle than the aforementioned embodiments shown in Figs. 1 through 8 can be maintained, thus further improving the turning performance. In these Figs. 9 and 10, the same numerals are used for corresponding parts shown in Fig. 6, the description of which, therefore, will not be repeated.

In each of the aforementioned embodiments, the exhaust control valves 36, mounted in the vicinity of the open end of the exhaust pipe 16 to the expansion chamber 20, may be connected at other position of the exhaust pipe 16 according to the purpose of the exhaust control valve. For instance, if it is for the purpose of back pressure control and self EGR, it is desirable to mount the exhaust control valve in a position near the engine 10. Also, the exhaust control valve may be disposed adjacent to the downstream side of the open end of the exhaust pipe 16.

Furthermore, if the exhaust control valves in the upper stage are moved back and forth of the exhaust valves in the lower stage, it will become possible to mount a suitable exhaust control valve 36 in the optimum position by adjusting it back or forth in accordance with a difference in length of each exhaust pipe 16 caused by treatment. Besides, it is possible to eliminate interference between the engine and the exhaust control valve by changing the position of each exhaust pipe in the width direction, thereby largely increasing the freedom of design.

Although the rotation transmission mechanism is desired to be of a link construction, it is understood that the present invention is not limited only thereto, but gears may be used to interconnect each valve shaft. This rotation transmission mechanism, as described in the embodiment, may be mounted not only on the end of the valve shaft 40 on the opposite side of the pulley 42 but on the same side as the rotation input member as a pulley. The rotation input member may be not only the pulley but other member such as a lever.

[Effect of the Invention]

The present invention, as aforementioned, is provided with one valve shaft common to a part of exhaust control valves and one valve shaft common to other remaining exhaust control valves, which are arranged non-coaxially and nearly parallelly with each other, a rotation input member mounted on the other end of the valve shafts, and a rotation transmission mechanism on the same end of both valve shafts. Therefore, a plurality of exhaust control valve can be controlled by a driving means such as one servo motor, thereby contributing toward the simplification of a control device. Further, since each valve shaft may be made short, and a single means or no means is required against the elongation of the valve shaft caused by the heat of exhaust gases. Furthermore, since the position of the exhaust control valves in the upper and lower sages can be changed in the lengthwise direction and also a spacing in the width direction of the exhaust pipes can be changed relatively freely, there is an effect to increase the freedom of design.

## Claims

1. An exhaust control device for a motorcycle having at least 3 exhaust pipes (16a,- 16d) which are connected at one end to exhaust ports of a combustion engine (10) and at the other end to an expansion chamber (20), said control device having exhaust control valves (36a - 36d) provided on two parallel shafts (40a, 40b), and further having a rotation transmission mechanism (46) provided at one end of both shafts (40a, 40b) to transmit rotation of one shaft to the other shaft, **characterized in that** at least the upper shaft (40a) is provided with two control valves (36a, 36d) each control valve (36a - 36d) being located in one of the exhaust pipes (16a - 16d) to change the area of exhaust flow path of each exhaust pipe, and that a mechanism to transfer a rotational movement to the control valve assembly (36a - 36d) is secured on said upper shaft (48).

2. An exhaust control device for a motorcycle according to claim 1, **characterized in that** said mechanism to transfer a rotational movement to the control valve assembly is secured on said upper shaft on the end opposite the end where the rotation transmission mechanism (46) to transmit rotation of one shaft to the other shaft is provided.

3. An exhaust control device for a motorcycle according to claim 1, **characterized in that** said mechanism to transfer a rotational movement to the control valve assembly is secured on said upper shaft on the same end where the rotation transmission mechanism (46) to transmit rotation of one shaft to the other shaft is provided.

4. An exhaust control device for a motorcycle according to claim 2 or claim 3, wherein the rotation transmission mechanism (46) for transmitting rotation of one shaft to the other shaft comprises a lever (44a, 44b) fixed at the one end of both valve shafts (40a, 40b) and a lid (46) connecting the rotating ends of both levers (44a, 44b).

5. An exhaust control device for a motorcycle according to one of claims 1 to 3, characterized in that said rotation transmission mechanism to transmit rotation of one shaft to the other shaft is constituted by gears.

6. An exhaust control device for a motorcycle according to one of claims 1 to 4, wherein the mechanism, provided for transmitting a rotional movement to the valve control mechanism comprises a pulley (42) fixed on one end of the upper valve shaft (40a) and a servo motor (52), the pulley (42) and said servo motor (52) being connected by a wire (50).

7. An exhaust control device for a motorcycle according to at least one of claims 1 to 6, wherein four exhaust pipes are provided, which are arranged under the engine of the motorcycle and which have two round bores (38b, 38c) in the lower stage of the exhaust control valve assembly and which are disposed close to the centre of the width direction of the engine (10), and two round bores (38a, 38d) in the upper stage of the control valve assembly, which are positioned in the outer side.

8. An exhaust control device for a motorcycle according to at least one of claims 1 to 6, wherein three exhaust pipes are provided and wherein the control valve assembly comprises one round bore (38b) in the lower stage and two round bores (38a, 38d) in the upper stage.

**Revendications**

1. Dispositif de commande de l'échappement pour une motocyclette présentant au moins trois tuyaux d'échappement (16a à 16d), qui sont reliés, par une extrémité, à des orifices d'échappement d'un moteur à combustion (10) et par l'autre extrémité à une chambre de détente (20), ledit dispositif de commande présentant des valves de commande d'échappement (36a à 36d) montées sur deux arbres parallèles (40a, 40b) et présentant en outre un mécanisme de transmission de rotation (46), monté sur une extrémité des deux arbres (40a, 40b), afin de transmettre la rotation d'un arbre à l'autre arbre, caractérisé en ce qu'au moins l'arbre supérieur (40a) est pourvu de deux valves de commande (36a, 36d), chaque valve de commande (36a, 36d) étant située dans l'un des tuyaux d'échappement (16a à 16d), pour changer l'aire du chemin d'écoulement de gaz d'échappement de chaque tuyau d'échappement, et en ce qu'un mécanisme, servant à transférer un mouvement de rotation à l'ensemble de valve de commande (36a à 36d) est fixé sur ledit arbre supérieur (48).

2. Dispositif de commande de l'échappement pour une motocyclette selon la revendication 1, caractérisé en ce que ledit mécanisme servant à transférer un mouvement de rotation à l'ensemble de valve de commande est fixé sur ledit arbre supérieur, sur l'extrémité opposée à l'extrémité sur laquelle est monté le mécanisme de transmission de rotation (46) servant à transmettre la rotation d'un arbre à l'autre arbre.

3. Dispositif de commande de l'échappement pour une motocyclette selon la revendication 1, caractérisé en ce que ledit mécanisme servant à transférer un mouvement de rotation à l'ensemble de valve de commande est fixé sur ledit arbre supérieur, sur la même extrémité que celle où est monté le mécanisme de transmission de rotation (46) servant à transmettre la rotation d'un arbre à l'autre arbre.

4. Dispositif de commande de l'échappement pour une motocyclette selon la revendication 2 ou 3, dans lequel le mécanisme de transmission de rotation (46) servant à transmettre la rotation d'un arbre à l'autre arbre comprend un levier (44a, 44b) fixé sur la première extrémité des deux arbres de valve (40a, 40b), et une bielle (46) reliant les extrémités rotatives des deux leviers (44a, 44b).

5. Dispositif de commande de l'échappement pour une motocyclette selon l'une quelconque des revendications 1 à 3, caractérisé en ce que ledit mécanisme de transmission de rotation servant à transmettre la rotation d'un arbre à l'autre arbre est constitué d'engrenages.

6. Dispositif de commande de l'échappement pour une motocyclette selon l'une quelconque des revendications 1 à 4, dans lequel le mécanisme prévu pour transmettre un mouvement de rotation au mécanisme de commande de valve comprend une poulie (42), fixée sur une extrémité de l'arbre de valve supérieur (40a) et un servomoteur (52), la poulie (42) et ledit servomoteur (52) étant reliés par un câble (50).

7. Dispositif de commande de l'échappement pour une motocyclette selon au moins l'une quelconque des revendications 1 à 6, dans lequel quatre tuyaux d'échappement sont prévus, qui sont ménagés sous le moteur de la motocyclette et présentant deux alésages ronds (38b, 38c), ménagés dans l'étage inférieur de l'ensemble de valve de commande d'échappement, et qui sont disposés près du centre, dans le sens de la largeur du moteur (10), et deux alésages ronds (38a, 38d), ménagés dans l'étage supérieur de l'ensemble de valve de commande, qui sont positionnés dans le côté extérieur.

8. Dispositif de commande de l'échappement pour une motocyclette selon au moins l'une quelconque des revendications 1 à 6, dans lequel trois tuyaux d'échappement sont prévus et dans lequel l'ensemble de valve de commande comprend un alésage rond (38b), ménagé dans l'étage inférieur et deux alésages ronds (38a, 38d) ménagés dans l'étage supérieur.

**Patentansprüche**

1. Auspuff-Kontrollvorrichtung für ein Motorrad, welches zumindest drei Auspuffrohre (16a-16d) aufweist, die mit einem Ende mit den Auspuff-Auslässen einer Verbrennungskraftmaschine (10) und mit dem anderen Ende mit einer Expansionskammer (20) verbunden sind, wobei diese Kontrollvorrichtung Auspuffkontrollventile (36a-36d) aufweist, die an zwei parallelen Wellen (40a, 40b) angeordnet sind, sowie ein Drehbewegungs-Übertragungsmechanismus (46), der an einem Ende eines der beiden Wellen (40a, 40b) angeordnet ist, um die Drehbewegung von einer Welle zu der anderen Welle zu übertragen, **dadurch gekennzeichnet,** daß zumindest die obere Welle (40a) mit zwei Kontrollventilen (36a, 36d) versehen ist, wobei jedes Kontrollventil (36a-36d) in einem der Auspuffrohre (16a-16d) angeordnet ist, um die Fläche des Auspuffgas-Strömungsweges von jedem Auspuffrohr zu ändern, und daß ein Mechanismus, um eine Drehbewegung auf die Kontroll-Ventileinrichtung (36a-36d) zu übertragen, an dieser oberen Welle (48) befestigt ist.

2. Auspuff-Kontrollvorrichtung für ein Motorrad gemäß Anspruch 1, **dadurch gekennzeichnet,** daß dieser Mechanismus zum Übertragen einer Drehbewegung auf die Kontroll-Ventileinrichtung an der oberen Welle an dem Ende befestigt ist, welches dem Ende entgegengesetzt ist, an welchem der Drehbewegungs-Übertragungsmechanismus (46) zum Übertragen der Drehbewegung von einer Welle auf die andere Welle angeordnet ist.

3. Auspuff-Kontrollvorrichtung für ein Motorrad gemäß Anspruch 1, **dadurch gekennzeichnet,** daß dieser Mechanismus zum Übertragen einer Drehbewegung auf die Kontroll-Ventileinrichtung an der oberen Welle an dem gleichen Ende angeordnet ist, an welchem der Drehbewegungs-Übertragungsmechanismus (46) zum Übertragen der Drehbewegung von einer Welle auf die andere Welle angeordnet ist.

4. Auspuff-Kontrollvorrichtung für ein Motorrad gemäß Anspruch 2 oder Anspruch 3, wobei der Drehbewegungs-Übertragungsmechanismus (46) zum Übertragen der Drehbewegung von einer Welle auf die andere Welle einen Hebel (44a, 44b) aufweist, der an dem einen Ende von beiden Ventilwellen (40a, 40b) befestigt ist, sowie eine Lasche (46), welche die drehenden Enden von beiden Hebeln (44a, 44b) verbindet.

5. Auspuff-Kontrollvorrichtung für ein Motorrad gemäß einem der Ansprüche 1 bis 3, **dadurch**

**gekennzeichnet,** daß dieser Drehbewegungs-Übertragungsmechanismus zum Übertragen der Drehbewegung von einer Welle auf die andere Welle durch Getrieberäder gebildet wird.

6. Auspuff-Kontrollvorrichtung für ein Motorrad gemäß einem der Ansprüche 1 bis 4, wobei der Mechanismus, welcher vorgesehen ist, um eine Drehbewegung auf die Ventilkontrolleinrichtung zu übertragen, eine Riemenscheibe (42) aufweist, die an einem Ende der oberen Welle (40a) angeordnet ist, sowie einen Servomotor (52), wobei diese Riemenscheibe (42) und dieser Servomotor (52) durch einen Draht (50) verbunden sind.

7. Auspuff-Kontrollvorrichtung für ein Motorrad gemäß mindestens einem der Ansprüche 1 bis 6, wobei vier Auspuffrohre vorgesehen sind, die unter dem Motor des Motorrades angeordnet sind, und welche zwei runde Bohrungen (38b, 38c) in dem unteren Bereich der Auspuff-Kontrollventileinrichtung aufweisen, und welche in der Nähe des Mittelpunktes der Breitenerstreckung des Motors (10) liegen, sowie zwei runde Bohrungen (38a, 38d) in dem oberen Bereich der Kontroll-Ventileinrichtung, die an der äußeren Seite angeordnet sind.

8. Auspuff-Kontrollvorrichtung für ein Motorrad gemäß mindestens einem der Ansprüche 1 bis 6, wobei drei Auspuffrohre vorgesehen sind, und wobei die Kontroll-Ventileinrichtung eine runde Bohrung (38b) aufweist, die im unteren Bereich angeordnet ist, und zwei runde Bohrungen (38a, 38d), die im oberen Bereich vorgesehen sind.

FIG.1

FIG. 2

FIG.3

EP 0 260 582 B1

FIG.4

EP 0 260 582 B1

FIG.5

FIG.6

FIG. 7

18b

18a

42    50    58    A

FIG.8

18b

44a   18a   48a,48d

46

48b,48c

A    44b

FIG.9

FIG.10